# EUROPEAN PATENT SPECIFICATION

(11) **EP 1 271 074 B1**
(45) Date of publication and mention of the grant of the patent: **27.09.2006**
(21) Application number: 02013639.6
(22) Date of filing: 19.06.2002
(51) Int. Cl.: F25B 45/00

(54) **Apparatus and method for R22 refrigerant recovery**
Vorrichtung und Verfahren zur Rückgewinnung von Kühlmittel R22
Dispositif et méthode de récupération de réfrigérant du type r22

(30) Priority: 27.06.2001 JP 2001194105
(43) Date of publication of application: 02.01.2003
(73) Proprietor: MATSUSHITA ELECTRIC INDUSTRIAL CO., LTD., Kadoma-shi, Osaka 571-8501 (JP)
(72) Inventor: Numoto, Hironao, Otsu-shi, Shiga 525-2101 (JP); Sato, Shigehiro, Kusatsu-shi, Shiga 525-0045 (JP); Sawai, Kiyoshi, Otsu-shi, Shiga 520-2101 (JP)
(74) Representative: Grünecker, Kinkeldey, Stockmair & Schwanhäusser Anwaltssozietät

(56) References cited:
- WO-A-99/40407
- US-A- 4 934 149
- US-A- 5 201 918
- US-A- 5 333 461
- US-A- 5 390 503

## Description

### Field of Invention

The present invention relates to an apparatus and method for R22 (CHClF₂) refrigerant recovery performed in discarding an air conditioner installed for use in a house or an office building.

### Background of the Invention

Conventionally, industrial waste made of iron, aluminum, copper, plastics and the like, and composite materials thereof, was recycled after having been pulverized using a crusher or the like and thereafter separated and classified.

Since industrial waste such as an air conditioner has a refrigerant and an oil sealed in the interior thereof, a pump-down operation is performed at its original site to recover an refrigerant in a refrigerating cycle system thereof temporarily in the body of an outdoor unit and thereafter, the outdoor unit is brought back to a well equipped workshop or the like to disintegrate. Even in the case, if the outdoor unit with the refrigerant included therein is thrown into a crusher, the refrigerant is spurred to come out and the oil leaks out, which brings about environment disruption and danger at high degrees; therefore recovery and separation of the refrigerant and oil prior to a process associated with disposal are required by law. For such a purpose, a compressor is generally used as a driving power for refrigerant recovery in combination with a recovery apparatus which forcibly sucks in the refrigerant. US-A-5 201 918 discloses an R22 recovery apparatus.

However, air conditioners on the market are available in various kinds and there are cases, when discarded, that a compressor installed in an air conditioner is broken down and cannot be operated, or a power supply is of no service any more. In such cases, too, it is required to accomplish sufficient recovery of a refrigerant without using a power supply. US 5,201,918 discloses a process for evacuating volatile gases from confined spaces.

In light of a conventional problem, it is an object of the present invention to provide an apparatus and a method for R22 refrigerant recovery that can quickly recover a refrigerant from a discarded air conditioner at its original site even when no power supply or the like is available.

### Summary of the Invention

The present invention provides, in order to achieve the above object, an R22 refrigerant recovery apparatus as defined in claim 1 having a pressure vessel filled with an amide base organic solvent or a glycol ether base organic solvent being added with a phosphite, wherein the pressure vessel includes inside thereof an introductory section for introducing an R22 refrigerant into the organic solvent, and a cooling mechanism section for cooling heat of reaction generated between the organic solvent and the R22 refrigerant.

With the above configuration, the R22 refrigerant is well dissolved and absorbed into an amide base organic solvent or a glycol ether base solvent and the heat of reaction generated at this time is cooled sufficiently in the cooling mechanism section, so that an inner pressure inside the pressure vessel does not increase so high and a high recovery rate can be assured.

The invention as set forth in claim 1 for achieving the above object is an R22 refrigerant recovery apparatus having a pressure vessel which is filled with an amide base organic solvent or a glycol ether base organic solvent, wherein the pressure vessel includes inside thereof an introductory section through which an R22 refrigerant is introduced into an organic solvent and a cooling mechanism section for cooling heat of reaction generated between the organic solvent and the R22 refrigerant,
wherein the pressure vessel further includes a diffusion mechanism section for bubbling, mixing and diffusing the R22 refrigerant into the organic solvent from the introductory section, and the diffusion mechanism section is formed of a molded member having a multiplicity of through-holes and made of ceramics, metal or resin, or of a pipe-shaped member made of resin.

The invention as set forth in claim 2 is the R22 refrigerant recovery apparatus, wherein the cooling mechanism section is formed of a pipe for allowing cooling water to pass therethrough or a combination of the pipe and fins for radiating heat, the pipe or the combination of the pipe and the fins being made of copper and aluminum singly or in combination of both copper and aluminum.

The invention as set forth in claim 3 is an R22 refrigerant recovery method for recovering an R22 refrigerant, wherein the R22 refrigerant is released into a liquid phase of an amide base organic solvent or a glycol ether base organic solvent, so as to perform refrigerant recovery while the R22 refrigerant is being dissolved and absorbed into the organic solvent, wherein the heat of reaction generated is coded as defined in this claim.

The invention as set forth in claim 4 is the R22 refrigerant recovery method, wherein valves for coupling an outdoor unit and a connecting pipe are closed and thereafter the R 22 refrigerant remaining inside an indoor unit and inside the connecting pipe is released into a liquid phase of an amid base organic solvent or a glycol ether base organic solvent, so as to perform refrigerant recovery while the R22 refrigerant is being dissolved and absorbed into the organic solvent.

In the invention preferably after the R22 refrigerant is released into a pressure vessel filled with water, the R22 refrigerant is recovered.

In the invention the R22 refrigerant is preferably released into a liquid phase of the amide base organic solvent or glycol ether base organic solvent at a speed of 1 to 5 L/min.

The invention as set forth in claim 7 is the R22 refrigerant recovery apparatus, wherein the amide base organic solvent is composed of at least one kind or a mixture of two or more kinds selected from a group consisting of N,N-dimethyl formamide, N, N-dimethyl acetoamide, N, N-dimethyl propionamide, and N,N-diethyl formamide.

The invention as set forth in claim 8 is the R22 refrigerant recovery apparatus, wherein the glycol ether base organic solvent is composed of at least one kind or of a mixture of two or more kinds selected from a group consisting of ethylene glycol dibutyl ether, diethylene glycol dimethyl ether, triethylene glycol dimethyl ether, and tetraethylene glycol dimethyl ether.

In the invention according to claim 1 the organic solvent is added with a phosphite compound (R₁O) (R₂O) (R₃O)P, a phosphate compound (R₁O) (R₂O) (R₃O)P(O) or a phosphonate compound (R₁O) (R₂O)R₃P(O), when each of R₁, R₂ and R₃ indicates, independently, a hydrogen atom, an alkyl group or a phenyl group.

The invention as set forth in claim 9 is the R22 refrigerant recovery apparatus, wherein an organic solvent is added with a phosphite compound, a phosphate compound or a phosphonate compound at a phosphorus concentration ratio of 0.05 to 0.5 wt %.

### Brief Description of Drawings

Fig. 1 is a schematic view of a main construction of a discarded air conditioner shown in embodiments of the present invention;
Fig. 2 is a sectional view of a pressure vessel for refrigerant recovery according to a first embodiment of the present invention;
Fig. 3 is a diagram of a pipeline of a refrigerant recovery apparatus for recovering a refrigerant from the discarded product, according to the first embodiment of the present invention;
Fig. 4 is a sectional view of a pressure vessel for refrigerant recovery according to a third embodiment of the present invention; and
Fig. 5 is a diagram of a pipeline of a refrigerant recovery apparatus for recovering a refrigerant from the discarded product, according to a fifth embodiment of the present invention.

### Preferred Embodiments

Detailed description of preferred embodiments of the present invention will be given below with reference to the accompanying drawings.

### First Embodiment

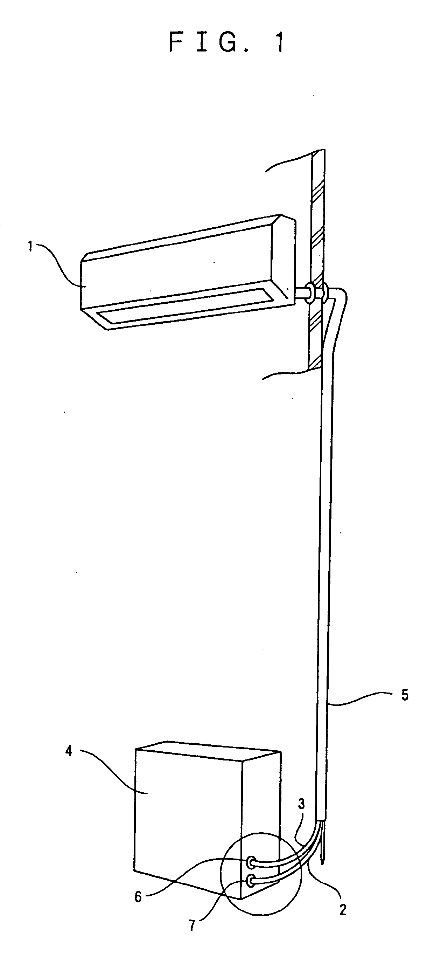

Fig. 1 shows a main configuration of an air conditioner. In this embodiment, such a case is assumed that a compressor is broken down into a non-operable state in an air conditioner having one outdoor unit and one indoor unit, in which R22 is used. The air conditioner comprises an indoor unit 1, connecting pipes 2 and 3, and an outdoor unit 4, as main component members and the connecting pipes 2 and 3 are covered with a pipe cover 5. Particularly, auxiliary pipes (not shown) extending from the indoor unit and the respective connecting pipes 2 and 3 are connected to each other with flared fittings, which has no specific relation with the object and effect of the present invention though. In a case like this, a two-way valve 6 and a three-way valve 7 located at a side surface of the body of the outdoor unit 4 are rotated to be closed using a hexagon wrench, so that an R22 refrigerant in the interior of the body of the outdoor unit 4 can be secured to stay in a fixed state where the refrigerant is not released to the atmospheric air even if the connecting pipes 2 and 3 are disengaged from the body of the outdoor unit 4. Accordingly, when the two-way valve 6 and the three-way valve 7 are closed, sections in which the R22 refrigerant remains and from which the remaining refrigerant needs be recovered are the interiors of the connecting pipes 2 and 3 and the interior of the indoor unit 1. The refrigerant recovery apparatus of the present invention is applied for recovery of the R22 refrigerant remaining is such sections. An operating procedure in refrigerant recovery is implemented by coupling a service port of the three-way valve 7 with a refrigerant remaining sections.

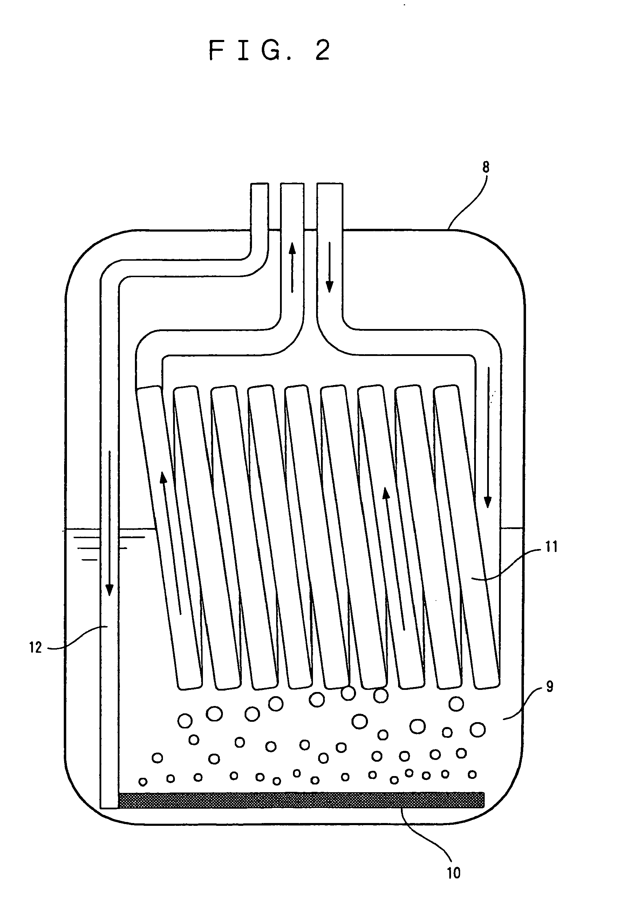

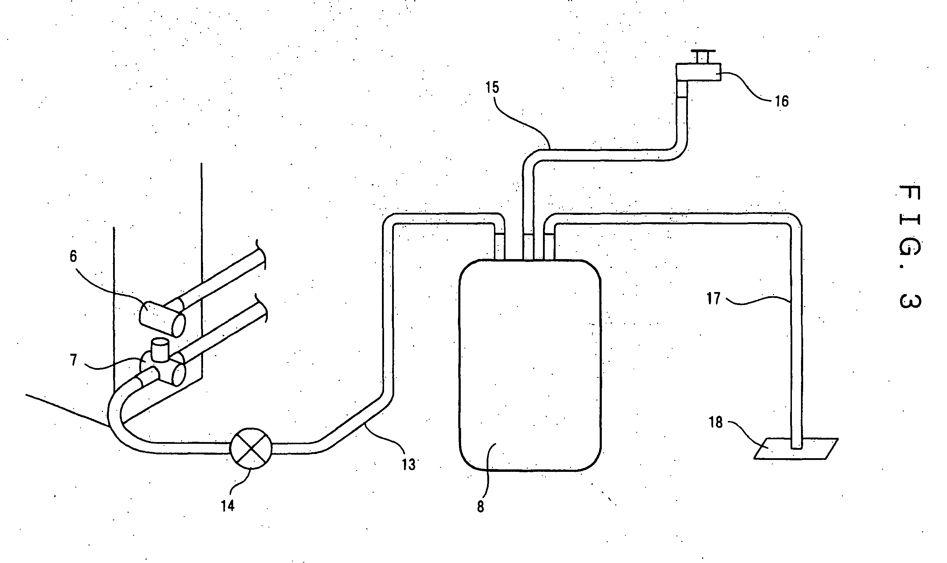

Fig. 2 shows an R22 refrigerant recovery apparatus. One liter of diethylene glycol dimethyl ether (hereinafter referred to as DEGDME) is filled in a cylinder-like shaped pressure vessel 8 with an inner volume of about 2 liters. In DEGDME, dimethyl:phosphite is added at a phosphorus concentration of 0.3 wt %. In the lower portion of the pressure vessel, a diffusion mechanism section 10 for a refrigerant gas constituted of a copper tube of 6 mm in diameter having many holes of 1 mm in diameter perforated on the periphery thereof is installed along the inner periphery and the refrigerant gas introduced from outside of the pressure vessel is released through the many holes. In the middle portion, a heat exchanger section which is wound in a helical shape with a copper tube is provided as a cooling mechanism section 11, through which cooling water introduced from outside the pressure vessel flows into the copper tube wound in a helical shape and out of it to be discharged outside. In Fig. 3, there is shown a pipeline diagram showing a relationship with the outdoor unit 4 of the refrigerant recovery apparatus. The diffusion mechanism section 10 in the pressure vessel 8 can be coupled to outside through a copper pipe 12 and further coupled to the service port of the three-way valve of the outdoor unit through a copper pipe 13. A valve 14 is provided in the path of the copper pipe. The copper tube of the cooling mechanism section 11 is coupled at one end thereof to a city water port 16 through a rubber hose 15, while the other end of thereof is coupled to a rubber hose 17 leading to a drain port 18.

Next, an operating procedure for R22 refrigerant recovery will be briefly described. First of all, the refrigerant recovery apparatus is coupled to the service port of the three-way valve with the valve 14 in a closed state and the city water port 16 is opened. Thereafter, the valve 14 is gradually opened to guide R22 refrigerant to the diffusion mechanism section 10. A feed rate of the R22 refrigerant gas at this time is adjusted to about 3 L/min. The R22 refrigerant gas is introduced, while being bubbled, into a liquid phase of DEGDME, so as to be subjected to a mixing reaction therewith and dissolved and absorbed therein. Heat generated at that time is sufficiently cooled by the city water introduced into the cooling mechanism section 11. A mixing reaction in dissolution and absorption reaches an equilibrium and stops when a difference in pressure disappears between the interior of the pressure vessel and a portion in which the refrigerant remains, that is for example the interior of the body of the indoor unit. Therefore, sufficient cooling of the pressure vessel and sufficient heating of the portion in which the refrigerant remains are important factors for improvement of the refrigerant recovery rate. Air conditioners are discarded any time throughout the year, while the peak time of recovery operations comes in the summer season. Even in the summer season, city water is at 20°C or lower and temperatures of the indoor unit and connecting pipes are on the order of 30°C, which enabled a refrigerant recovery rate of 90% or more to be achieved.

A mixed solution of DEGDME in which R22 refrigerant is recovered is brought back to a recycle plant or a specified processing plant to enable only the refrigerant to be separated from the organic solvent in a heating process. In the present embodiment, the refrigerant is separated by the heating process at about 130°C and the DEGDME solvent is again refined to be able to be used many times. At this time, if no dimethyl phosphite is added, DEGDME is decomposed in the heat refining operation with the result of gradual reduction in ability of refrigerant absorption of the DEGDME solvent as the number of refining increases.

In the present embodiment, an organic solvent that can be used in the present invention is not limited to DEGDME, but in addition, the following may be used: ethylene glycol dibutyl ether (EGDBE), triethylene glycol dimethyl ether (T3EGDME) and tetraethylene glycol dimethyl ether (TEGDME) glycol ether, singly or as a mixture in combination. These organic solvents easily form a hydrogen bond with R22 refrigerant, which is considered to contribute to improvement of the dissolving ability of the refrigerant.

### Second Embodiment

In the present embodiment, refrigerant recovery was performed by filling the interior of the pressure vessel with N,N-dimethyl formamide (DMF, added with 0.2 wt % diethyl phosphite), followed by an operating procedure similar to the first embodiment. In this case as well, a refrigerant recovery rate of 90% or more was achieved.

While DMF was used in the present embodiment, an organic solvent that can be used for the present invention is not limited to DMF. Other usable organic solvents may be N,N-dimethyl acetoamide (DMA), N,N-dimethyl propionamide (DMP) and N,N-diethyl formamide (DEF), singly or as a mixture in combination. The organic solvents easily form a hydrogen bond with R22 refrigerant, which is considered to contribute to improvement of the dissolving ability of the refrigerant.

### Third Embodiment

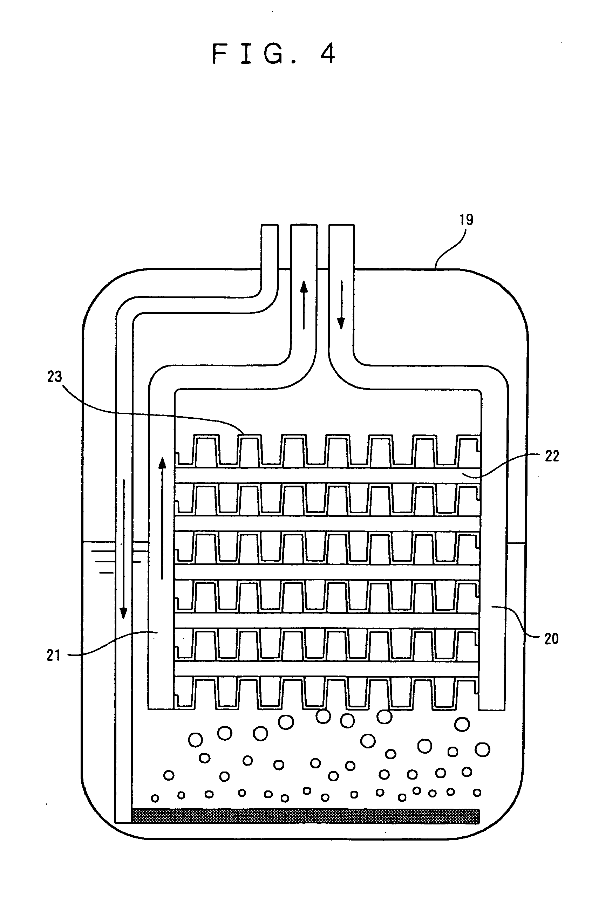

In the present embodiment, a cooling mechanism section inside the pressure vessel 19 has a construction as shown in Fig. 4. Many copper tubes 22 are provided in the lateral direction so as to be coupled to copper tubes 20 and 21 positioned in the vertical direction in parallel to each other and copper fins 23 for heat radiation are arranged between the copper tubes 22. In the present embodiment, by using a construction of a heat exchanger used generally in a radiator of an automobile as the construction of the cooling mechanism section; cooling was able to be positively accelerated, therefore the feed rate of R22 refrigerant was adjusted to be at about 5 L/min. Cooling ability achieved was superior to that of the cooling mechanism section in a helical shape used in the first embodiment, and dissolution and absorption was enabled even at a larger flow rate of the refrigerant.

### Fourth Embodiment

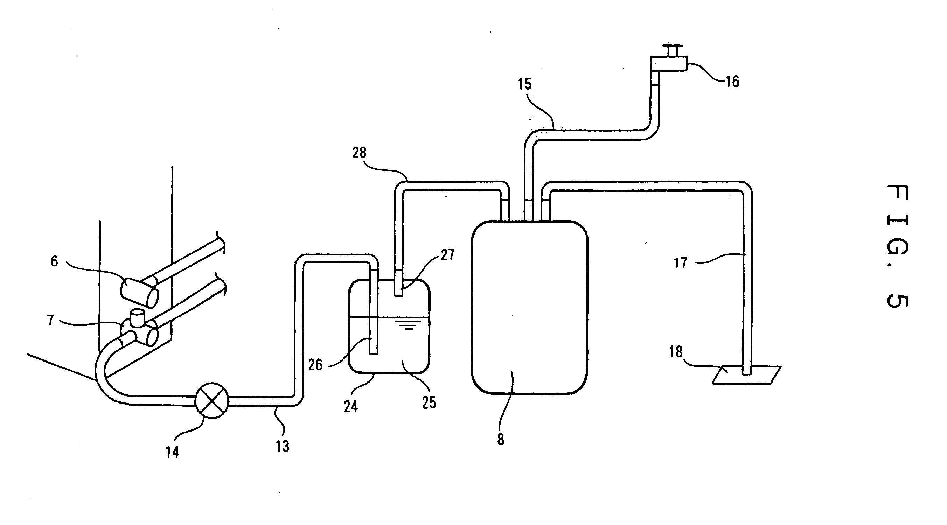

In the present embodiment, description will be given of a case where a refrigerator oil is separated before being dissolved and absorbed in the pressure vessel for refrigerant recovery. In Fig. 5, there is shown a pipeline diagram of a relationship, in this case, between the refrigerant recovery apparatus and the outdoor unit. The pressure vessel used for refrigerant recovery was similar to the vessel used in the first embodiment, so that descriptions of duplicate component parts are omitted here. A prescribed quantity of water 25 is filled into a pressure vessel 24, and R22 refrigerant gas and a refrigerator oil introduced via the copper tube 13 is introduced, while being bubbled, into the water through a feed port 26. At this time, the refrigerator oil enters a suspension state with the water, however the oil comes to separate from the water to form a upper layer over the water after a while of being left in a stationary condition. The refrigerant gas, after having been bubbled in the water, is discharged through.a discharge port pipe 27, and introduced through a copper tube 28 into the pressure vessel for R22 refrigerant recovery filled with an organic solvent. Thus, the refrigerant gas was subjected to a mixing reaction with an organic solvent EGDBE, to be dissolved and absorbed in the solvent at the same time. The refrigerator oil having been clearly separated from water after a while of being left in a stationary condition may be separated by removal of the upper layer of the refrigerator oil, thus facilitating a recycle process for the refrigerator oil.

In the first to fourth embodiments, dimethyl phosphite and diethyl phosphite were used, but there is no specific limitation to additives which can be used for the present invention. The following compounds may also be used, that are trimethyl phosphite, triethyl phosphite and diisopropyl phosphite. Furthermore, there can be used a phosphite compound expressed in a chemical formula of (R₁O) (R₂O)(R₃O)P, a phosphate compound expressed in a chemical formula of (R₁O) (R₂O) (R₃O)P(O) or phosphonate compound expressed in a chemical formula of (R₁O)(R₂O)R₃P(O), wherein R₁, R₂ and R₃ each indicate a hydrogen atom, an alkyl group or a phenyl group. These additives each begins exertion of an adverse influence when the phosphorus concentration rate is in the range of 1 wt % or more, so that no effect matching with a quantity of an additive can be expected. On the other hand, when the phosphorus concentration rate is in the range of 0.5 to 1 wt %, a considerable difference appears in effect according to a molecular weight and a structure of an additive, even bringing up a bad effect to the contrary in some cases. Therefore, it is favorable that the phosphorus concentration rate is in the range of 0.05 to 0.5 wt %, with which a sufficiently stable effect can be expected. A remarkable effect was attained especially in the range of 0.05 to 0.2 wt %.

In each of the embodiments, a copper tube formed with many holes was used as the diffusion mechanism section for a refrigerant gas, but the diffusion mechanism section may otherwise be composed of a molded body having many through-holes made of ceramics, resin and metal particles, or of a ceramic or resin pipe formed with many holes. It is an important role of the section to disperse the refrigerant gas into an organic solvent as small bubbling gas particles as possible.

In these embodiments, there were shown such cases where a copper tube is wound in a helical shape and where a copper tube and copper fins are combined to form a shape generally called a radiator structure, but a material for use is not limited to copper alone as far as it is excellent in thermal conductivity, such that aluminum singly or a composite of copper and aluminum may be used.

In these embodiments, a refrigerant gas flow rate was in the range of 3 to 5 L/min, and it was known that the applicable refrigerant gas rate according to the invention ranges from 1 to 5 L/min. When the flow rate is 1 L/min or less, a recovery operation takes too much time, which degrades the working efficiency in refrigerant recovery. When the flow rate is 5 L or more, reaction heat generated is very high so that a cooling can hardly follow and a dissolution reaction speed cannot follow the feed rate, and the pressure inside the pressure vessel is unfavorably caused to increase with ease.

### Effect of the Invention

As is clear from the above.embodiments, according to the invention as set forth in claim 1, R22 refrigerant is well dissolved and absorbed in an amide base organic solvent or a glycol ether base organic solvent, and a heat of reaction generated at this time is sufficiently cooled in the cooling mechanism section to prevent an inner pressure of the pressure vessel from increasing so high.

According to the invention, used for the diffusion mechanism section is a molded body made of ceramics, metal or resin and having may through-holes, or a pipe-shape resin member, so that the refrigerant can be well reacted, as small gas particles, with an organic solvent through a sufficient mixing diffusion reaction, thereby improving the speed of dissolution and absorption.

According to the invention as set forth in claim 2, used for the cooling mechanism section is a pipe for allowing cooling water to pass therethrough or a combination of the pipe and fins for heat radiation, wherein the pipe or the combination of the pipe and fins are made of copper or aluminum singly or in combination of both. As a result, the heat of reaction of the refrigerant can be sufficiently radiated to suppress temperature rise in the recovery vessel.

According to the invention as set forth in claim 3, even if there is no facility such as a power supply, there can be provided a simple and easy method of quick refrigerant recovery from an air conditioner at any site.

According to the invention as set forth in claim 4, there can be provided a simple and easy method of quick refrigerant recovery, wherein an amount of a refrigerant to be recovered from a discarded air conditioner is limited thereby to reliably perform the quick refrigerant recovery at any site

According to an embodiment of the invention, a refrigerant gas is introduced, while being bubbled, into water so that a refrigerator oil present in a refrigerant gas remaining portion is separated from water and left in the vessel, and only a refrigerant is then guided, while being bubbled, into an organic solvent to be dissolved and absorbed therein. As a result, contamination of the organic solvent by the refrigerator oil can be prevented, thereby suppressing the lowering in performance of dissolution and absorption caused by a refrigerant oil.

According to a prefered embodiment of the invention, by controlling a mixing reaction between a solvent and an organic solvent at a suitable speed, a smooth solvent recovery operation can be ensured.

According to the invention as set forth in claim 7, by selecting a proper amide base organic solvent into which a refrigerant is absorbed, more of a refrigerant can be recovered with less of an organic solvent.

According to the invention as set forth in claim 8, by selecting a proper glycol ether base organic solvent into which a refrigerant is absorbed, more of a refrigerant can be recovered with less of an organic solvent.

According to the invention, by adding a phosphite compound, a phosphate compound or a phosphonate compound into an organic solvent, a heating process is performed in separating the organic solvent recovered from the R22 refrigerant. At this time, generation of an impurity in the decomposition of the organic solvent can be suppressed, thereby allowing the organic solvent to be refined and recycled many times.

According to the invention as set forth in claim 9, by optimizing, in the phosphorus concentration, a quantity of a phosphite compound, a phosphate compound or a phosphonate compound, which are added into an organic solvent, the effect of the additive can be exerted effectively.

### Description of Reference Symbols

- 1: indoor unit
- 2: connecting pipe
- 3: connecting pipe
- 4: outdoor unit
- 6: two-way valve
- 7: three-way valve
- 8: pressure vessel
- 9: DEGDME
- 10: diffusion mechanism section
- 11: cooling mechanism section
- 12: copper pipe
- 13: copper pipe
- 14: valve
- 19: pressure vessel
- 20: copper tube
- 21: copper tube
- 22: copper tube
- 23: copper fin
- 24: pressure vessel
- 25: water
- 26: feed port
- 27: discharge port

## Claims

1. An R22 refrigerant recovery apparatus having a pressure vessel (8) filled with an amide base organic solvent or a glycol ether base organic solvent, said organic solvent being added with a phosphite compound (R₁O) (R₂O) (R₃O)P, a phosphate compound (R₁O)(R₂O)(R₃O)P(O) or a phosphonate compound (R₁O) (R₂O)R₃P(O), wherein each of R₁, R₂ and R₃ indicates, independently, a hydrogen atom, an alkyl group or a phenyl group, **characterized in that**
said pressure vessel (8) includes inside thereof an introductory section (12) for introducing an R22 refrigerant into said organic solvent, and a cooling mechanism section (11) for cooling reaction heat generated between said organic solvent and said R22 refrigerant,
wherein said pressure vessel (8) further includes a diffusion mechanism section (10) for bubbling, mixing and diffusing said R22 refrigerant into said organic solvent from said introductory section (12), said diffusion mechanism section (10) being formed of either one of a molded member having a multiplicity of through-holes and made of ceramics, metal or resin, and a pipe-shaped member made of resin.

2. The R22 refrigerant recovery apparatus according to claim 1, wherein said cooling mechanism section (11) is formed of a pipe (22) for allowing cooling water to pass therethrough or a combination of the pipe (22) and fins (23) for radiating heat, said pipe or said combination of said pipe and said fins being made of copper or aluminum singly or in combination of both copper and aluminum.

3. An R22 refrigerant recovery method for recovering an R22 refrigerant, **characterized in that** the R22 refrigerant is released, while being bubbled, into a liquid phase of an amide base organic solvent or a glycol ether base organic solvent, so that the refrigerant recovery is performed while the R22 refrigerant is being dissolved and absorbed into said organic solvent, wherein the heat of reaction generated is cooled in a cooling mechanism section.

4. The R22 refrigerant recovery method according to claim 3, wherein valves (6, 7) for coupling an outdoor unit (4) and connecting pipes (2, 3) are closed, and thereafter said R22 refrigerant remaining inside an indoor unit (1) and inside said connecting pipes (2, 3) is recovered.

5. The R22 refrigerant recovery method according to claim 3, wherein said organic solvent is added with a phosphite compound (R₁O) (R₂O) (R₃O) P, a phosphate compound (R₁O) (R₂O) (R₃O) P (O) or a phosphonate compound (R₁O) (R₂O) R₃P (O), wherein each of R₁, R₂ and R₃ indicates, independently, a hydrogen atom, an alkyl group or a phenyl group.

6. The R22 refrigerant recovery method according to claim 3, wherein said R22 refrigerant is released into a liquid phase of said amide base organic solvent or glycol ether base organic solvent at a speed of 1 to 5 L/min.

7. The R22 refrigerant recovery apparatus according to claim 1, wherein said amide base organic solvent is composed of at least one kind or a mixture of two or more kinds selected from a group consisting of N,N-dimethyl formamide, N,N-dimethyl acetoamide, N,N-dimethyl propionamide, and N,N-diethyl formamide.

8. The R22 refrigerant recovery apparatus according to claim 1, wherein said glycol ether base organic solvent is composed of at least one kind or a mixture of two or more kinds selected from a group consisting of ethylene glycol dibutyl ether, diethylene glycol dimethyl ether, triethylene glycol dimethyl ether, and tetraethylene glycol dimethyl ether.

9. The R22 refrigerant recovery apparatus according to claim 1, wherein said organic solvent is added with a phosphite compound, a phosphate compound or a phosphonate compound at a phosphorus concentration ratio of 0.05 to 0.5 wt%.

## Patentansprüche

1. Vorrichtung zur Rückgewinnung des Kühlmittels R22 mit einem Druckbehälter (8), welcher mit einem organischen Lösungsmittel auf Amidbasis oder einem organischen Lösungsmittel auf Glykoletherbasis angefüllt ist, wobei das organische Lösungsmittel mit einer Phosphitverbindung (R₁O) (R₂O) (R₃O) P, einer Phosphatverbindung (R₁O) (R₂O) (R₃O) P (O) oder einer Phosphonatverbindung (R₁O) (R₂O) R₃P (O) zugegeben wird, wobei jedes von R₁, R₂ und R₃ unabhängig voneinander ein Wasserstoffatom, eine Alkylgruppe oder eine Phenylgruppe angibt,
**dadurch gekennzeichnet, dass** der Druckbehälter (8) im Inneren einen Einführbereich (12) umfasst, um ein Kühlmittel R22 in das organische Lösungsmittel einzuführen, und einen Kühleinrichtungsbereich (11) zur Abkühlung der Reaktionswärme, welche zwischen dem organischen Lösungsmittel und dem Kühlmittel R22 erzeugt wird,
wobei der Druckbehälter (8) des Weiteren einen Diffusionsbereich (diffusion mechanism section) (10) zum Blasen, Mischen und Diffundieren des Kühlmittels R22 in das organische Lösungsmittel aus dem Einführbereich (12), wobei der Diffusionsbereich (10) aus geformt ist aus einem geformten Element mit einer Vielzahl von Durchgangslöchern, welches aus Keramik, Metall oder Harz besteht, oder aus einem rohrförmigen Element, welches aus Harz besteht.

2. Vorrichtung zur Rückgewinnung des Kühlmittels R22 gemäß Anspruch 1, wobei der Kühleinrichtungsbereich (11) aus einem Rohr (22) gebildet ist, um zu ermöglichen, dass Kühlwasser durch dieses hindurchgeleitet wird oder aus einer Kombination des Rohrs (22) und Rippen bzw. Lamellen (23), um Wärme abzustrahlen, wobei das Rohr oder die Kombination des Rohrs und der Rippen bzw. Lamellen aus Kupfer oder Aluminium einzeln oder in Kombination aus beiden, Kupfer und Aluminium, hergestellt ist.

3. Verfahren zur Rückgewinnung eines Kühlmittels R22, **dadurch gekennzeichnet, dass** das Kühlmittel R22 freigesetzt wird, während es Blasen bildet, in eine flüssige Phase eines organischen Lösungsmittels auf Amidbasis oder eines organischen Lösungsmittels auf Glycoletherbasis, so dass die Rückgewinnung des Kühlmittels durchgeführt wird, während das Kühlmittel R22 aufgelöst und in das organische Lösungsmittel adsorbiert wird, wobei die erzeugte Reaktionswärme in einem Kühleinrichtungsbereich abgekühlt wird.

4. Verfahren zur Rückgewinnung des Kühlmittels R22 gemäß Anspruch 3, wobei Ventile (6, 7) zum Verbinden bzw. Verkuppeln einer äußeren Einheit (4) und Verbindungsrohren (2, 3) geschlossen sind, und anschließend das Kühlmittel R22, welches im Inneren einer inneren Einheit (1) und im Inneren der Verbindungsrohre (2, 3) zurückbleibt, zurückgewonnen wird.

5. Verfahren zur Rückgewinnung des Kühlmittels R22, gemäß Anspruch 3, wobei das organische Lösungsmittel mit einer Phosphitverbindung (R₁O) (R₂O) (R₃O) P, einer Phosphatverbindung (R₁O) (R₂O) R₃O) P (O) oder einer Phosphonatverbindung (R₁O) (R₂O) R₃P (O), zugegeben wird, wobei jedes von R₁, R₂ und R₃ unabhängig voneinander ein Wasserstoffatom, eine Alkylgruppe oder eine Phenylgruppe angibt.

6. Verfahren zur Rückgewinnung des Kühlmittels R22 gemäß Anspruch 3, wobei das Kühlmittel R22 in einer flüssigen Phase des organischen Lösungsmittels auf Amidbasis oder des organische Lösungsmittels auf Glycoletherbasis mit einer Geschwindigkeit von 1 bis 5 L/Min. freigesetzt wird.

7. Vorrichtung zur Rückgewinnung des Kühlmittels R22 gemäß Anspruch 1, wobei das organische Lösungsmittel auf Amidbasis aus wenigstens einer Art oder einer Mischung von zwei oder mehreren Arten zusammengesetzt ist, gewählt aus einer Gruppe bestehend aus N,N-Dimethylformamid, N,N-Dimethylacetoamid, N,N-Dimethylpropionamid, und N,N-Diethylformamid.

8. Vorrichtung zur Rückgewinnung des Kühlmittels R22 gemäß Anspruch 1, wobei das organische Lösungsmittel auf Glycoletherbasis aus wenigstens einer Art oder einer Mischung von zwei oder mehreren Arten besteht, gewählt aus einer Gruppe bestehend aus Ethylenglycoldibutylether, Diethylenglycoldimethylether, Triethylenglycoldimethylether und Tetraethylenglycoldimethylether.

9. Vorrichtung zur Rückgewinnung des Kühlmittels R22 nach Anspruch 1, wobei das organische Lösungsmittel mit einer Phosphitverbindung, einer Phosphatverbindung oder einer Phosphonatverbindung mit einem Phosphorkonzentrationsverhältnis von 0,05 bis 0,5 Gew.-% zugegeben wird.

## Revendications

1. Dispositif de récupération de réfrigérant de type R22 ayant une cuve à pression (8) remplie avec un solvant organique à base d'amide ou un solvant organique à base de glycol éther, ledit solvant organique étant ajouté avec un composé de phosphite (R₁O)(R₂O)(R₃O)P, un composé de phosphate (R₁O)(R₂O)(R₃O)P(O) ou un composé de phosphonate (R₁O)(R₂O)R₃P(O), où chacun de R₁, R₂ et R₃ indique, indépendamment, un atome d'hydrogène, un groupe alkyle ou un groupe phényle, **caractérisé en ce que**
ladite cuve à pression (8) inclue en son intérieur une section d'introduction (12) pour introduire un réfrigérant de type R22 dans ledit solvant organique, et une section de mécanisme de refroidissement (11) pour refroidir la chaleur de réaction générée entre ledit solvant organique et ledit réfrigérant de type R22,
où ladite cuve à pression (8) inclue par ailleurs une section de mécanisme de diffusion (10) pour faire barboter, mélanger et diffuser ledit réfrigérant de type R22 dans ledit solvant organique à partir de ladite section d'introduction (12), ladite section de mécanisme de diffusion (10) étant formée de l'un d'un organe moulé ayant une multitude de trous traversants et fait en céramique, métal ou résine, et un organe en forme de tuyau fait en résine.

2. Dispositif de récupération de réfrigérant de type R22 selon la revendication 1, dans lequel ladite section de mécanisme de refroidissement (11) est formée d'un tuyau (22) pour permettre à de l'eau de refroidissement d'y passer à travers ou une combinaison du tuyau (22) et d'ailettes (23) pour faire rayonner de la chaleur, ledit tuyau ou ladite combinaison dudit tuyau et desdites ailettes étant faits en cuivre ou aluminium uniquement ou en une combinaison de cuivre et d'aluminium.

3. Procédé de récupération de réfrigérant de type R22 pour récupérer un réfrigérant de type R22, **caractérisé en ce que** le réfrigérant de type R22 est libéré, tout étant barboté, dans une phase liquide d'un solvant organique à base d'amide ou un solvant organique à base de glycol éther, de sorte que la récupération de réfrigérant est effectuée tandis que le réfrigérant de type R22 est en train d'être dissout et absorbé dans ledit solvant organique, où la chaleur de réaction générée est refroidie dans une section de mécanisme de refroidissement.

4. Procédé de récupération de réfrigérant de type R22 selon la revendication 3, dans lequel des soupapes (6, 7) pour coupler une unité d'extérieur (4) et des tuyaux de connexion (2, 3) sont fermées, et par la suite ledit réfrigérant de type R22 restant à l'intérieur d'une unité d'intérieur (1) et à l'intérieur desdits tuyaux de connexion (2, 3) est récupéré.

5. Procédé de récupération de réfrigérant de type R22 selon la revendication 3, dans lequel ledit solvant organique est ajouté avec un composé de phosphite (R₁O)(R₂ O)(R₃O)P, un composé de phosphate (R₁O)(R₂O)(R₃O)P(O) ou un composé de phosphonate (R₁O)(R₂O)R₃P(O), où chacun de R₁, R₂ et R₃ indique, indépendamment, un atome d'hydrogène, un groupe alkyle ou un groupe phényle.

6. Procédé de récupération de réfrigérant de type R22 selon la revendication 3, dans lequel ledit réfrigérant de type R22 est libéré dans une phase liquide dudit solvant organique à base d'amide ou solvant organique à base de glycol éther à une vitesse de 1 à 5 L/min.

7. Dispositif de récupération de réfrigérant de type R22 selon la revendication 1, dans lequel ledit solvant organique à base d'amide est composé d'au moins un type ou un mélange de deux types ou plus sélectionnés à partir d'un groupe consistant en du N, N-diméthyle formamide, N, N-diméthyle acétoamide, N, N-diméthyle propionamide, et N, N-diéthyle formamide.

8. Dispositif de récupération de réfrigérant de type R22 selon la revendication 1, dans lequel ledit solvant organique à base de glycol éther est composé d'au moins un type ou un mélange de deux types ou plus sélectionnés à partir d'un groupe consistant en du éthylène glycol d'éther dibutylique, diéthylène glycol d'éther diméthylique, triéthylène glycol d'éther diméthylique, et du tétraéthylène glycol d'éther diméthylique.

9. Dispositif de récupération de réfrigérant de type R22 selon la revendication 1, dans lequel ledit solvant organique est ajouté avec un composé de phosphite, un composé de phosphate ou un composé de phosphonate à un taux de concentration de phosphore de 0,05 à 0,5 % en poids.
